# EUROPEAN PATENT APPLICATION

(11) **EP 1 586 404 A1**
(43) Date of publication of application: **19.10.2005**
(21) Application number: 03811894.9
(22) Date of filing: 11.11.2003
(51) Int. Cl.: B23K 11/14

(54) **METHOD OF WELDING SHAFT-LIKE PART ON PLURALLY PILED STEEL PLATES**

(30) Priority: 23.11.2002 JP 2002382108
(71) Applicant: Aoyama, Yoshitaka, Sakai-shi, Osaka 590-0114 (JP)
(72) Inventor: AOYAMA, Yoshitaka, Sakai-shi, Osaka 590-0114 (JP); AOYAMA, Shoji, Sakai-shi, Osaka 590-0114 (JP)
(74) Representative: White, Duncan Rohan
(86) International application number: PCT/JP2003/014337
(87) International publication number: WO 2004/048026

(57) **Abstract**

A method of welding a shaft-like part to a stack of steel sheets is disclosed in which the saft-like part is composed of a stem portion (2), a flange (3) integrally formed on the stem portion (2), and a projection (4) disposed at the center of the flange (3) and smaller in diameter than the flange (3). The method comprises the steps of inserting the shaft-like part (1) at its stem portion (2) into a holding hole (8) in a movable electrode (6), stacking a plurality of steel sheets (10 and 11) so as to keep the stack in contact with a fixed electrode (12), advancing the movable electrode (6) to press the projection (4) against the steel sheet (10) so as to reduce the thickness of at least the steel sheet (10) pressed by the projection (4), and passing a welding current between the two electrodes (6 and 12) so that the welding of the shaft-like part (1) and the integration of a plurality of steel sheets (10 and 11) are reliably achieved.

## Description

### TECHNICAL FIELD

This invention relates to a welding method wherein a shaft-like part is welded to a stack of steel sheets and the integration of the plurality of steel sheets and the joining of the shaft-like part to the steel sheets are effected at a time.

### BACKGROUND ART

The welding of a shaft-like part to a stack of steel sheets by electric resistance welding is disclosed in Japanese Patent Laid-Open Specification Heisei 8-1341. According to the disclosed method, a flanged shaft-like part is welded to a so-called vibration damping steel sheet, in which a vibration damper of synthetic resin or the like is sandwiched between two thin steel sheets, this being a welding method peculiar to vibration damping steel sheets, applied exclusively to single vibration damping steel sheets. In such sandwiched vibration damping steel sheet, it is arranged that passage of electricity while pressing the spherical portion formed in the entire flange against the vibration damping steel sheet results in the intermediate vibration damper melting and removed to allow the two thin steel sheets to be welded together.

With the welding method described above, since the spherical portion formed in the entire flange is pressed against the thin steel sheet, the local pressing is insufficient and so is the surface pressure, so that there is the danger of the current density of the welding current being lower than a predetermined value. If such phenomenon occurs, it follows that sufficient Joule heat cannot be obtained, with the result that the melting of the steel sheet is insufficient, causing a lack of the weld strength. Further, the prior art described above relates to a vibration damping steel sheet, but is not a technique associated with the case of a stack of independent thin steel sheets. When independent thin steel sheets are stacked and a shaft-like part, such as a projection bolt, is to be welded thereto, there may be contemplated a method comprising the steps of welding a shaft-like part to a single thin steel sheet and then spot-welding another thin steel sheet thereto, or a method comprising the steps of spot-welding a plurality of thin steel sheets in advance and then welding a shaft-like part thereto. With such welding process, however, the number of process steps increases, a disadvantage from the standpoint of improvement in productivity and stability of weld quality.

### DISCLOSURE OF INVENTION

The present invention has been proposed to solve the problems described above. The invention resides in inserting a shaft-like part composed of a stem portion, a flange integrally formed on the stem portion, and a flat-headed projection disposed at the center of the flange and smaller in diameter than the flange, at its stem portion into a holding hole in a movable electrode, stacking a plurality of steel sheets so as to keep the stack in contact with a fixed electrode, advancing the movable electrode to press the projection against the steel sheet so as to reduce the thickness of at least the steel sheet pressed by the projection, and passing a welding current through the two electrodes.

Since the flat-headed projection smaller in diameter than the flange of the shaft-like part reduces the thickness of the independent single steel sheet pressed by the projection, as described above (swaging), the volume of metal at the start of melting has been reduced because of the reduction of the thickness and the reduction of the area of the projection, as describe above. At the same time as the start of passage of electricity, this volume-reduced metal portion rapidly evolves heat; thus, the melting of metal is reliably started. With this melting of metal, the projection also melts, so that welding between the flange and the steel sheet in contact with the same reliably proceeds. Along with the proceeding of welding, the melting of the contact portion between the steel sheets also proceeds, and finally the welding between the flange and the steel sheet in contact therewith and the welding between the steel sheets are reliably effected. Therefore, the welding of the shaft-like part, and the integration of the steel sheets are simultaneously achieved in a sufficiently welded state at the time of the welding of the shaft-like part. Thus, this dispenses with the step of spot-welding steel sheets in advance, and is useful for improving productivity. Further, since the weld in the shaft-like part coincides with the weld in the steel sheets in the direction of the thickness of the steel sheet, the welding-integration between the shaft-like part and the steel sheets is achieved substantially at a single place, thus attaining simplification from the standpoint of welding construction and securing a sufficient weld strength.

At the same time as the thickness of the steel sheet pressed by the projection is reduced, the thickness of the steel sheet in contact with the fixed electrode may also be reduced. When the thickness of the steel sheet in contact with the fixed electrode is thus reduced, the heat evolution or melting of this steel sheet is rapidly and reliably effected to form a predetermined nugget, as in the case of the steel sheet in contact with the projection.

The flange surface may preferably be pressed against the surface of the steel sheet in that the projection cuts into the steel sheet. Since the projection is welded to the thin steel sheets in a state in which the former cuts into the latter, it follows that the flange is pressed against the surface of the steel sheet. Therefore, the welding to the steel sheet is accomplished at the center of the flange, with the entire region of the flange being pressed against the surface of the steel sheet, thus improving the joining rigidity of the shaft-like part. That is, even if an external force tending to tilt the shaft-like part acts on the stem portion, this does not lead to a phenomenon in which the stem portion easily tilts, since the entire region of the flange is pressed against the thin steel sheet.

The welding ranges between the projection and thin steel sheet and between the steel sheets are wider than the surface area of the projection. Since the projection cuts into the thin steel sheet and melts from its center toward the outer periphery, the melting is not limited to the range of the projection alone but extends to a range wider than the surface area of the projection, forming a sufficiently wide melt section, making it possible to secure a weld quality of high strength.

The number of steel sheets may be three. Since the initial melting is reliably attained by reducing the thickness of the thin steel sheet in contact with the projection by means of the projection, as described above, the melting of the respective intimately contacted portions of the steel sheets is effected simultaneously or subsequently. Therefore, even in the case of three steel sheets, the individual steel sheets are reliably welded, to say nothing of the welding of the shaft-like part, by increasing the pressing force on the movable electrode or increasing the welding current.

The shaft-like part may comprise a stem portion, a flange integrally formed at an end of the stem portion, and a flat-headed projection disposed at the center of the flange, with diameters d₁, d₂, and d₃ of the stem portion, projection, and flange, respectively being in the following relation : d₁ ≦ d₂ < d₃. When the diameter d₂ of the projection is smaller than the diameter d₁ of the stem portion, the projection can collapse as it is pressed against a steel sheet, failing to deform the steel sheet.

The surface of the flange from which the projection protrudes may preferable slope gently towards the outer periphery of the flange rather than being flat, so as to provide an annular build-up of metal, or a weld metal, for an increase in bonding strength of the welded shaft-like part and steel sheet.

These and other objects, features, and advantages of this invention will be readily appreciated as the same becomes better understood by reference to the following detailed description when considered in connection with the accompanying drawing.

### BRIEF DESCRIPTION OF DRAWINGS

Fig. 1A is a longitudinal section, showing a device for carrying out the method of the invention;
Fig. 1B is a side view, showing a projection bolt as a shaft-like part;
Fig. 2A is a longitudinal section, showing a deforming step;
Fig. 2B is a longitudinal section, showing a melting step;
Fig. 3 is a longitudinal section, showing another deformed state; Fig. 4 is a schematic sectional view showing the dimensional relation between a projection, a melt section and a flange; and
Fig. 5 is a side view showing another projection bolt.

### BEST MODE FOR CARRYING OUT THE INVENTION

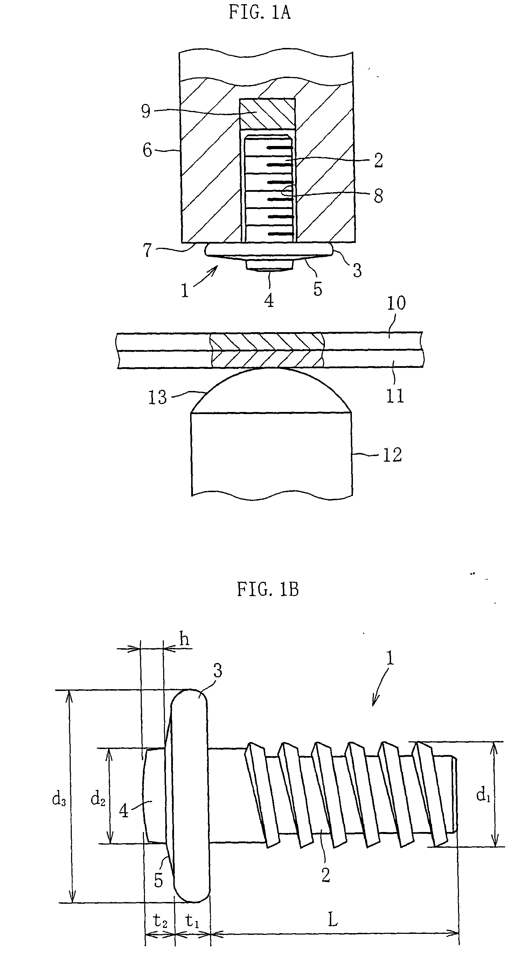

Figure 1A depicts an outline of a welding device and Figure 1B depicts a projection bolt as an example of a shaft-like part. The shaft-like part 1 has a bolt stem 2, which is the stem portion, having a circular flange 3 integrated therewith, the flange 3 being centrally formed with a circular projection 4 smaller in diameter than the flange 3. A gentle slope 5, such as a conical surface and a spherical surface, extends between the projection 4 and the outer periphery of the flange 3. Further, the shaft-like part 1 is made of iron, which is a magnetic body.

Various dimensions of the projection bolt as shown in Fig. 1B are exemplified in the following table. When the overall thickness (t₁ - t₂) of the bolt head including the flange 3 and projection 4 amounts to 3 mm, the axial dimension, or thickness, of the slope 5 is 0.2 mm.

| DIMENSION | EXAMPLE | |
|---|---|---|
| | 1 | 2 |
| STEM PORTION | | |
| LENGTH L | 12 | 14 |
| DIAMETER d₁ | 5 | 5 |
| FRANGE | | |
| THICKNESS t₁ | 1. 8 | 1. 7 |
| DIAMETER d₃ | 10 | 12 |
| PROJECTION | | |
| HEIGHT h | 5 | 6 |
| DIAMETER d₂ | 1.0 | 1.1 |
| (mm) | | |

A movable electrode 6 is adapted for vertical advancement and retraction and its end surface 7 is a flat surface, the end surface 7 having a holding hole 8 centrally formed therein, it being arranged that the bolt stem 2 is inserted therein so that the end surface 7 intimately contacts the back surface of the flange 3. Attached to the innermost of the holding hole 8 is a permanent magnet 9 to attractively hold the shaft-like part 1. Thin steel sheets 10 and 11 are each a single independent thin steel sheet, and the two stacked thin steel sheets 10 and 11 are contacted with a fixed electrode 12 by using an unillustrated support jig. The thickness of each of the thin steel sheets 10 and 11 is for example 0.8 mm. The fixed electrode 12 is coaxial with the movable electrode 6, the upper end thereof being a spherical surface 13.

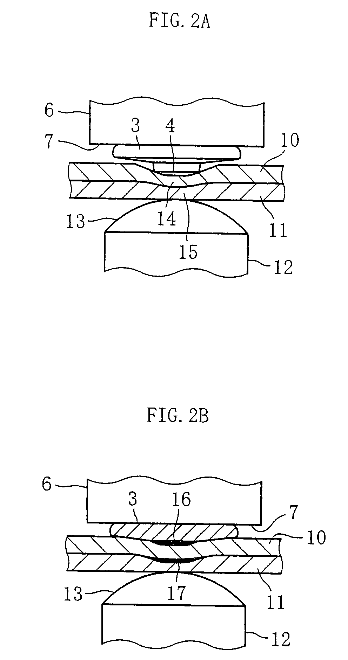

Fig. 1A shows the bolt stem 2 inserted in the holding hole 8 in the movable electrode 6 and attracted by the permanent magnet 9, with the back surface of the flange 3 being intimately contacted with the end surface 7 of the movable electrode 6. Here, when the movable electrode 6 is advanced downward by the actuation of a drive means, such as an air cylinder or electric motor, the projection 4 on the flange 3, as shown in Fig. 2A, is pressed hard against the thin steel sheet 10. Thereby, the projection 4 deforms the thin steel sheet 10 as if cutting therein. At this time, the thin steel sheet 10 is locally thinned. And since the region to be thinned is the narrow range of the projection 4 whose sectional area is much smaller than the flange 3, the thinned portion of the thin steel sheet 10 is greatly reduced in volume when considered from the volume of metal as compared with the peripheral non-deformed portion.

The press-deformed portion of the thin steel sheet 10 mentioned above is indicated by the numeral 14. Further, when the thin steel sheet 10 is pressed as described above, some deformation forms in the lower thin steel sheet 11, reducing the thickness. This portion is indicated as a press-deformed portion by the numeral 15. The press-deformed portion 14, as shown in Fig. 2A, is locally formed in the projection 4. Therefore, the projection 4 cuts into the thin steel sheet 10, with the flange 3 being brought very close the thin steel sheet 10.

When a welding current is passed between the electrodes 6 and 12, which are in such pressed state shown in Fig. 2A, welding as shown in Fig. 2B is effected. As indicated by the numeral 14, the volume of metal in the press-deformed portion 14 at the start of melting has been reduced because of the reduction of the thickness and the reduction of the area of the projection 4. At the same time as the passage of electricity, this volume-reduced metal portion rapidly evolves heat; thus, the melting of metal is reliably started. With this melting of metal, the projection 4 also melts, so that welding between the flags 3 and the thin steel sheet 10 in contact with the same reliably proceeds. Along with the proceeding of welding, the melting of the contact portion between the two thin steel sheets 10 and 11 also proceeds, and finally the welding between the flange 3 and the thin steel sheet 10 in contact therewith and the welding between the two thin steel sheets 10 and 11 are reliably effected. Therefore, the welding of the shaft-like part 1, and the integration of the two thin steel sheets 10 and 11 are simultaneously achieved in a sufficiently welded state at the time of the welding of the shaft-like part 1 in a sufficiently melted state.

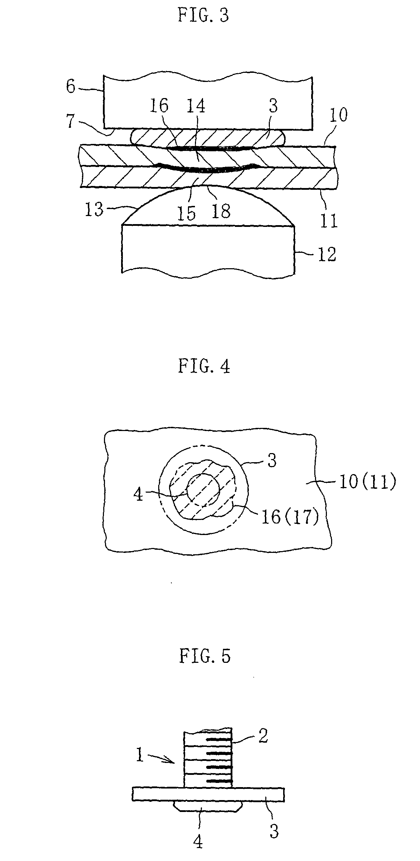

At this time, the volume portion of the projection 4 has been completely melted, followed by the formation of a melt section 16 larger than the area of the projection 4. That is, since the projection 4 cuts into the thin steel sheet 10 and melts from its center toward the outer periphery, the melting is not limited to the range of the projection 4 alone but extends to a range wider than the surface area of the projection 4, forming a sufficiently wide melt section 16, making it possible to secure a weld quality of high strength. The dimensional relation between the projection 4, melt section 16, and flange 3 is shown in Fig. 4. Further, the melting of the contact portion between the two thin steel sheets 10 and 11 proceeds along with this welding, and finally the welding between the flange 3 and the thin steel sheet 10 in contact therewith and the welding between the two thin steel sheets 10 and 11 are reliably effected. Therefore, the welding of the shaft-like part 1 and the integration of the two thin steel sheets 10 and 11 are simultaneously achieved during the welding of the shaft-like part 1 in a sufficiently welded state.

Further, since the volume-reduction of the press-deformed portion 15 as well as the portion 14 has proceeded to some extent, the molt volume has been reduced. Therefore, the rapid evolution of heat with a sufficient temperature proceeds also in the region of contact between the thin steel sheets 10 and 11, forming a wide melt section indicated by the numeral 17, so that the two thin steel sheets 10 and 11 are integrated with a high weld strength.

Fig. 3 shows a case where the pressing force on the movable electrode 6 is set high; therefore, the spherical surface 13 of the fixed electrode 12 cuts into the lower thin steel sheet 11 to form a recess 18. When the recess 18 is thus formed, the thickness of the press-deformed portion 15 further reduces, so that the evolution of heat during the passage of electricity rapidly proceeds to provide a stabilized melt section 17. Thus, the formation of the press-deformed portions 14 and 15 results in these portion being reduced in heat mass, facilitating heat evolution and melting, so that the melt sections 16 and 17, which are reliably melted, are secured over as large an area as possible, and a weld strength is sufficiently set.

In Figs. 1A, 2A, 2B and 3, the fixed electrode 12 is shown as having a spherical surface 3, it may have a flat surface. As will be understood, a smaller area of contact between the steel sheet and fixed electrode 12 results in a smaller area of current-carrying part and thus of fusion.

Accordingly, the area of contact between the fixed electrode 12 and steel sheet is as close as possible to the outer diameter of the flange portion 3. For instance, an electrode for use in spot welding which has a tapered end with a reduced end surface area may be used, though, the end surface area should be set so that the area of contact between the fixed electrode 12 and steel sheet, when pressed, is as close as possible to the outer diameter of the flange portion 3.

Fig. 5 shows a modification where a projection bolt 1 of different type has a flat projection 4 of small height without the slope 5 shown in Fig. 1B. In this case also, the same weld quality as the projection bolt 1 described above is obtained. However, lighter pressing force will suffice with the Fig. 1B projection bolt rather than Fig. 5 projection bolt.

The embodiment described above refers to the case of two thin steel sheets; however, over two, say, three may be stacked. In the case of a stack of three also, press deformation and melting proceed through the same process as in the case of a stack of two.

## Claims

1. A method of welding a shaft-like part to a stack of steel sheets comprising the steps of inserting a shaft-like part composed of a stem portion, a flange integrally formed on at an end of the stem portion, and a flat-headed projection disposed at the center of the flange and smaller in diameter than the flange, at its stem portion into a holding hole in a movable electrode, stacking a plurality of steel sheets so as to keep the stack in contact with a fixed electrode, advancing the movable electrode to press said projection against the steel sheet so as to reduce the thickness of at least the steel sheet pressed by the projection, and passing a welding current between the two electrodes.

2. A method of welding a shaft-like part to a stack of steel sheets as set forth in Claim 1, wherein at the same time as the thickness of the steel sheet pressed by the projection is reduced, the thickness of the steel sheet in contact with the fixed electrode is also reduced.

3. A method of welding a shaft-like part to a stack of steel sheets as set forth in Claim 1 or 2, wherein said flange surface is pressed against the surface of the steel sheet in that said projection cuts into the steel sheet.

4. A method of welding a shaft-like part to a stack of steel sheets as set forth in any of Claims 1 through 3, wherein the welding ranges between said projection and steel sheet and between the steel sheets are wider than the surface area of the projection.

5. A shaft-like part for use in the method as set forth in any of Claims 1 through 4 comprising a stem portion, a flange integrally formed on the stem portion, and a flat-headed projection disposed at the center of the flange, diameters d₁, d₂, and d₃ of the stem portion, projection and flange, respectively, are in the follow relation: d₁ ≦ d₂ < d₃.

6. A shaft-like part as set force in Claim 5, wherein a surface of the flange from which the projection protrudes slopes toward an outer periphery of the flange.
